(19) Europäisches Patentamt
European Patent Office
Office européen des brevets

(11) Veröffentlichungsnummer: **0 084 822**
**B1**

(12) # EUROPÄISCHE PATENTSCHRIFT

(45) Veröffentlichungstag der Patentschrift: **08.01.86**

(51) Int. Cl.⁴: **C 07 F 9/38**, C 07 F 9/40, C 07 F 9/65, A 61 K 31/66

(21) Anmeldenummer: **83100282.9**

(22) Anmeldetag: **14.01.83**

(54) **Diphosphonsäure-Derivate und diese enthaltende pharmazeutische Präparate.**

(30) Priorität: **27.01.82 DE 3203308**

(43) Veröffentlichungstag der Anmeldung: **03.08.83 Patentblatt 83/31**

(45) Bekanntmachung des Hinweises auf die Patenterteilung: **08.01.86 Patentblatt 86/2**

(84) Benannte Vertragsstaaten: **AT BE CH DE FR GB IT LI LU NL SE**

(56) Entgegenhaltungen:
**EP - A - 0 015 370**

**M. WINDHOLZ et al.: "The Merck Index", 9. Auflage, 1976, Seiten 31,296,297,308,407,519,520,649,656,695,696,801,1164,12-24, Appendix-2, Merck & Co., Inc., Rahway, n.J., USA**

(73) Patentinhaber: **SCHERING AKTIENGESELLSCHAFT Berlin und Bergkamen, Müllerstrasse 170/178 Postfach 65 03 11, D-1000 Berlin 65 (DE)**

(72) Erfinder: **Biere, Helmut, Dr., Zeltinger Strasse 15, D-1000 Berlin 28 (DE)**
Erfinder: **Rufer, Clemens, Dr., Westhofener Weg 14, D-1000 Berlin 38 (DE)**
Erfinder: **Böttcher, Irmgard, Dr., Frobenstrasse 46, CH-4000 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft neue Diphosphonsäure-Derivate, ein Verfahren zu ihrer Herstellung und pharmazeutische Präparate, die diese Verbindungen als Wirkstoffe enthalten.

Die neuen Diphosphonsäure-Derivate sind gekennzeichnet durch die allgemeine Formel I

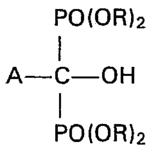 (I),

worin

R ein Wasserstoffatom, ein Alkalimetallatom, ein Erdalkalimetallatom oder eine 1 bis 4 Kohlenstoffatome enthaltende Alkylgruppe darstellt und

A der Rest

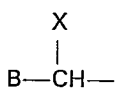

ist, worin

X ein Wasserstoffatom, eine Methylgruppe oder eine Ethylgruppe darstellt und

B einen in para-Stellung durch einen Isobutylrest, Cyclohexylrest oder 1-Pyrrolinylrest und gegebenenfalls zusätzlich in der meta-Stellung durch Fluor oder Chlor substituierten oder einen in meta-Stellung durch eine Benzoylgruppe oder Phenoxygruppe substituierten oder einen in ortho-Stellung durch eine 2,4-Dichlorphenoxygruppe oder eine 2,6-Dichlorphenylaminogruppe substituierten Phenylrest bedeutet, oder

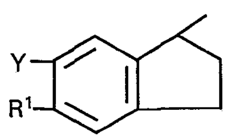

bedeutet, worin

$R^1$ einen Cyclohexylrest oder Cyclopentylmethylrest darstellt und

Y ein Wasserstoffatom oder ein Chlorarom bedeutet, oder

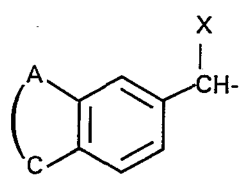

bedeutet, worin

X die obengenannte Bedeutung besitzt und

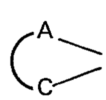 die Reste

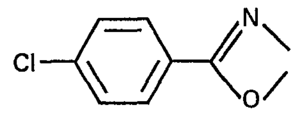 ;

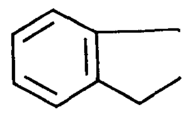 ;

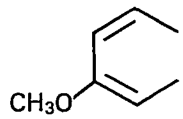 oder

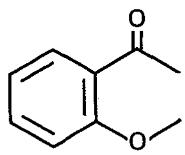

darstellen, oder

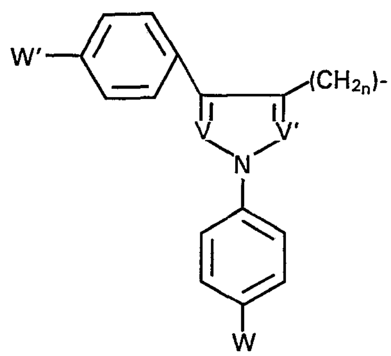

bedeutet, worin

n die Ziffern 1, 2 oder 3 darstellt, W und

W' gleich oder verschieden sind und ein Wasserstoffatom, ein Fluoratom oder ein Chloratom darstellen und einer der Reste V oder V' ein Stickstoffatom und der andere ein gegebenenfalls durch eine Phenylgruppe substituierter Methinrest bedeutet, oder

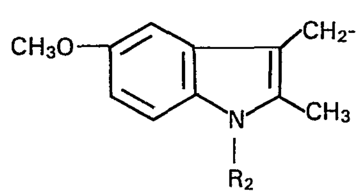

bedeutet, worin

$R_2$ einen p-Chlorbenzoylrest oder Cinnamoylrest darstellt, bedeutet.

Diphosphonsäure-Derivate mit antiatherogener Aktivität sind aus der Europäischen Patentanmeldung 0 015 370 vorbekannt.

Die neuen Phosphonsäure-Derivate leiten sich von antiphlogistisch und antiinflammatorisch wirksamen Carbonsäuren der allgemeinen Formel II

$$ACOOH \quad (II),$$

worin A die obengenannte Bedeutung besitzt, ab. Derartige Carbonsäuren sind beispielsweise die in der Enzyklopädie von M. Windholz et. al. «The Merck Index» 10. Auflage 1976, Merck u. Co. Inc., Rahway N.J., USA beschriebenen Substanzen: Ibuprofen (Index Nr. 4797), Butibufen (Index Nr. 1496), Alcofenac (Index Nr. 209), Pirprophen (Index Nr. 7380), Ketoprofen (Index Nr. 5142), Fenoprofen (Index Nr. 3913), Fenclofenac (Index Nr. 3900), Diclofenac (Index Nr. 3066), Clindonac (Index Nr. 2319), Benoxaprofen (Index Nr. 1044), Naproxen (Index Nr. 6269), Lonazolac (Index Nr. 5392) oder Indomethacin (Index Nr. 4852). Weitere Carbonsäuren sind beispielsweise die 6-Chlor-5-cyclopentylmethyl-1-indancarbonsäure, die 1-(2-9H-Fluorphenyl)-propionsäure (Cicloprofen), die 6,11-Dihydro-11-oxodibenz[b,e]-oxepin-2-essigsäure (Isoxepac), die 1,3,5-Triphenyl-pyrazolyl-essigsäure (Trifezolac) oder die 4-(4-Chlorphenyl)-1-(4-fluorphenyl)-3-pyrazolyl-essigsäure.

Die erfindungsgemässen Verbindungen haben ebenso wie die Carbonsäuren der Formel II

A-COOH (II),

eine ausgeprägte antiinflammatorische und antiarthritische Wirksamkeit. Gegenüber diesen Substanzen zeichnen sie sich aber dadurch aus, dass sie unter anderem imstande sind, die Aufbau- und Abbau-Leistung der Knochenzellen (Osteoblasten/Osteoklasten) so zu beeinflussen, dass kurative Effekte bei Ratten mit induzierter Arthritis eindeutig nachweisbar sind.

Mit dieser antiarthritischen Wirksamkeit der erfindungsgemässen Verbindungen ist die Grundlage für eine Therapie der Rheumatoiden Arthritis, der Osteoarthritis, Spondylitis ankylosans und anderer verwandter Erkrankungen, besonders des Kollagens und des Skelettsystems (Osteoporose, Pagetskrankheit) geschaffen. Darüber hinaus können die Phosphonate als gute Komplexbildner für Calcium überall dort therapeutisch sinnvoll eingesetzt werden, wo ein gestörter Ca-Stoffwechsel als Ursache für eine Erkrankung erkannt wurde, z.B. bei cardiovaskulären Erkrankungen, ektopischen Calcifikationen.

Die Verbindungen können in Form ihrer Ester, Halbester — vorzugsweise jedoch in Form der freien Phosphonsäuren bzw. deren physiologisch veträglichen Salzen mit Alkali-, Erdalkalihydroxiden oder verträglichen organischen Basen wie Natriumhydroxid, Kaliumhydroxid, Calziumhydroxid, Piperazin oder N-Methylglucamin angewendet werden. Als galenische Formulierungen sind Kapseln, Tabletten, Dragees, Suppositorien, aber auch Injektionslösungen und dermale Zubereitungen geeignet. Auch eine lokale Anwendung zur Behandlung dermaler oder systemischer Erkrankungen ist möglich.

Die Herstellung der Phosphonate erfolgt nach Methoden wie sie dem Fachmann wohlbekannt sind (Houben-Weyl, Methoden der organischen Chemie, Georg Thieme Verlag Stuttgart, 4. Auflage, 1963 Band XII/1,453, ff) und welche in dem nachfolgenden Schema dargestellt sind.

*Schema*

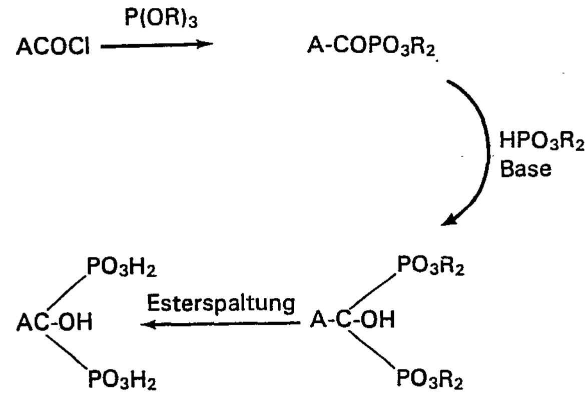


(die Verbindungen der Formel $A\text{-}COPO_3R_2$ liegen, wenn A ein Arylmethylrest ist in enolisierter Form vor.)

Als Basen, die sich zur Durchführung des erfindungsgemässen Verfahrens eignen, seien beispielsweise sekundäre Amine, wie Diethylamin, Dipropylamin, Diisopropylamin, Morpholin oder Piperidin genannt. Die Reaktion wird in inerten organischen Lösungsmitteln, wie Ethern (zum Beispiel Diethylether, Di-isopropylester, Dioxan, Tetrahydrofuran) oder chlorierten Kohlenwasserstoffen (zum beispiel Dichlormethan, Tetrachlorethan, Chloroform oder Tetrachlorkohlenstoff) durchgeführt.

Die sich gegebenenfalls anschliessende Verseifung der Ester kann mittels Mineralsäuren (zum Beispiel halbkonzentrierter Salzsäure oder Schwefelsäure) durchgeführt werden. Besonders schonend gelingt die Spaltung in einem inerten Lösungsmittel (zum Beispiel einen der obengenannten chlorierten Kohlenwasserstoffe) mit Trimethylsilyljodid. Zur Salzbildung werden die freien Säuren in üblicher Weise mit den entsprechenden Basen umgesetzt.

Die in dem Schema dargestellten Synthesewege sind anhand typischer Vertreter in den nachfolgenden Ausführungsbeispielen näher erläutert.

*Beispiel 1*

Eine Suspension von 3,70 g 2-[1-(4-Chlorbenzoyl)-5-methoxy-2-methyl-3-indolyl]-1-hydroxy-ethen-phosphonsäuredimethylester (US Patent 4 014 997) in 20 ml Tetrahydrofuran wird bei —7 °C zu einer Lösung von 1,08 g Dimethylphosphit und 0,63 g Diethylamin gegeben und 3 Stunden lang bei —7°C und dann 16 Stunden lang bei —15°C stehengelassen. Dann saugt man den ausgefallenen Niederschlag ab und erhält so 3,2 g 2-[1-(4-Chlorbenzoyl)-5-methoxy-2-methyl-3-indolyl]-1-hydroxy-ethan-1,1-bis(phosphonsäuredimethylester) vom Schmelzpunkt 163°C.

*Beispiel 2*

16,6 g 2-(6-Methoxy-2-naphthyl)-propionsäure werden in 200 ml Diethylether mit 16,2 g Phosphorpentachlorid 60 Minuten lang bei 20°C gerührt. Dann engt man die Mischung ein, verreibt den Rückstand mit Benzin und erhält so 18 g 2-(6-Methoxy-2--naphthyl)-propionylchlorid vom Schmelzpunkt 95°C.

6,66 d dieses Säurechlorids werden in 100 ml Diethylether bei 20°C mit 3,99 g Trimethylphosphit versetzt und 16 Stunden lang aufbewahrt. Dann engt man die Mischung ein, kristallisiert den Rückstand aus Diisopropylether und erhält 3,63 g 2-(6-Methoxy-2-naphthyl)-propionyl-phosphonsäure-dimethylester vom Schmelzpunkt 59°C.

Zu einer Suspension von 5,0 g dieses Phosphonsäureesters in 70 ml Diethylether werden 1,42 g Dimethylphosphit und bei —10°C 0,26 g Dibutylamin in 10 ml Diethylether gegeben. Man kühlt 2 Stunden lang bei —5°C saugt das Kristallisat ab und erhält 4,46 g 2-(6-Methoxy-2-naphthyl)-1-hydroxy-propan-1,1-bis(phosphonsäuredimethylester) vom Schmelzpunkt 140°C.

*Beispiel 3*

4,66 g 2-(4-Isobutylphenyl)-propionsäure werden in 150 ml Diethylesther mit 5,04 g Phosphorpentachlorid eine Stunde lang bei 20°C gerührt. Dann engt man im Vakuum ein und erhält 5,02 g 2-(4-Isobutylphenyl)-propionylchlorid. Dieses wird wie in Beispiel 2 beschrieben mit Trimethylphosphit umgesetzt und man erhält den 2-(4-Isobutylphenyl)-propionyl-phosphonsäuredimethylester. Der Dimethylester wird unter den in Beispiel 2 beschriebenen Bedingungen mit Dimethylphosphit umgesetzt und man erhält den 2-(4-Isobutylphenyl)-1-hydroxy-propan-1,1-bis(phosphonsäuredimethylester).

*Beispiel 4*

2,68 g (11-Oxo-2-dibenz[b,f]oxepinyl)-essigsäure werden in 9,15 ml Thionylchlorid gelöst und 3 Stunden unter Rückfluss erhitzt. Dann engt man im Vakuum ein und erhält 3,04 g (11-Oxo-2-dibenz[b,f]-oxepinyl)-acetylchlorid. Dieses Säurechlorid wird unter den Bedingungen des Beispiels 2 mit Trimethylphosphit umgesetzt und man erhält 1,34 g 2-(11--Oxo-2-dibenz[b,f]oxepinyl)-1-hxdroxy-ethen-phosphonsäuredimethylester vom Schmelzpunkt 118°C. Das erhaltene Produkt wird wie im Beispiel 1 beschrieben mit Dimethylphosphit umgesetzt und man erhält den 2-(11-Oxo-2-dibenz[b,f]oxepinyl)-1--hydroxy-ethan-1,1-bis(phosphonsäuredimethylester) vom Schmelzpunkt 133°C.

*Beispiel 5*

3,22 g 6-Chlor-5-cyclopentylmethyl-1-indancarbonsäure werden mit 10,5 ml Thionylchlorid eine Stunde lang unter Rückfluss erhitzt, eingeengt und man erhält 3,45 g 6-Chlor-5-cyclopentylmethyl-1--indan-carbonsäurechlorid als Öl. Das Säurechlorid wird wie im Beispiel 2 beschrieben mit Triethylphosphit umgesetzt und man erhält 3 g (6-Chlor-5--cyclopentylmethyl-1-indanyliden)-hydroxymethan--phosphonsäurediethylester vom Schmelzpunkt 126°C. Die erhaltene Verbindung wird unter den im Beispiel 2 genannten Bedingungen mit Diethylphosphit umgesetzt und man erhält den (6-Chlor-5-cyclopentylmethyl-1-indanyl)-hydroxymethan-bis(phosphonsäurediethylester).

*Beispiel 6*

2-[N-Acetyl-N-(2,6-dichlorphenyl)-amino]-phenylessigsäure wird mit Phosphorpentachlorid in Diethylether zum 2-[N-Acetyl-N-(2,6-dichlorphenyl)--amino]-phenylessigsäurechlorid umgesetzt. Das Säurechlorid wird dann unter den im Beispiel 2 beschriebenen Bedingungen mit Trimethylphosphit zum 2-[N-Acetyl-N-(2,6-dichlorphenyl)-amino]-phenyl-1-hydroxy-ethen-1-phosphonsäuredimethylester umgesetzt, welches mit Dimethylphosphit unter den Bedingungen des Beispiels 1 in 2-[2-(2,6--Dichlorphenylamino)-phenyl]-1-hydroxy-ethan--1,1-bis(phosphonsäuredimethylester) überführt wird.

*Beispiel 7*

2-[2-(2,6-Dichlorphenylamino)-phenyl]-1-hydroxy-ethan-1,1-bis(phosphonsäuredimethylester) wird 4 Stunden lang mit konzentrierter Salzsäure auf dem Dampfbad erhitzt dann verdünnt man die Mischung mit Wasser lässt sie erkalten und saugt das abgeschiedene Produkt ab. Man erhält so die 2-[2--(2,6-Dichlorphenylamino)-phenyl]-1-hydroxy--ethan-1,1-diphosphonsäure.

*Beispiel 8*

2-[1-(4-Chlorbenzoyl)-5-methoxy-2-methyl-3-indolyl]-1-hydroxy-ethan-1,1-bis(phosphonsäuredimethylester) (2,18 g) werden in 15 ml Tetrachlormethan bei —5°C mit 2,29 ml Jodtrimethylsilan versetzt und 4 Stunden bei 0°C aufbewahrt. Dann engt man die Mischung im Vakuum ein und versetzt mit Eiswasser. Der ausgefallene Niederschlag wird mit Acetonitril verrieben, abgesaugt und man erhält 1,92 g 2-[1-(4-Chlorbenzoyl)-5-methoxy-2-methyl--3-indolyl]-1-hydroxy-ethan-1,1-diphosphonsäure vom Schmelzpunkt 202°C.

*Beispiel 9*

Unter den Bedingungen des Beispiels 7 wird der 2-(6-Methoxy-2-naphthyl)-1-hydroxy-propan-1,1--bis(phosphonsäuredimethylester) hydrolysiert und man erhält die 2-(6-Methoxy-2-naphthyl)-1-hydroxy-propan-1,1-diphosphonsäure vom Schmelzpunkt 205°C.

*Beispiel 10*

Unter den Bedingungen des Beispiels 7 wird 2--(4-Isobutylphenyl)-1-hydroxy-propan-1,1-bis-(phosphonsäuredimethylester) hydrolisiert und man erhält die 2-(4-Isobutylphenyl)-1-hydroxy-propan-1,1-diphosphonsäure.

*Beispiel 11*

Unter den Bedingungen des Beispiels 7 wird der 2-(11-Oxo-2-dibenz[b,f]oxepinyl)-1-hydroxy-ethan--1,1-bis(phosphonsäuredimethylester) umgesetzt und man erhält die 2-(11-Oxo-2-dibenz[b,f]oxepinyl)-1-hydroxy-ethan-1,1-diphosphonsäure vom Schmelzpunkt 228°C.

*Beispiel 12*

Unter den Bedingungen des Beispiels 7 wird der (6-Chlor-5-cyclopentylmethyl-1-indanyl)-hydroxymethan-bis(phosphonsäurediethylester) umgesetzt

und man erhält die (6-Chlor-5-cyclopentylmethyl-1--indanyl)-hydroxymethan-diphosphonsäure.

*Beispiel 13*

a) 16,5 g 4-(Chlorphenyl)-1-(4-fluorphenyl)-3--pyrazolessigsäure werden in 400 ml Diethylether auf —15°C gekühlt und portionsweise mit 14,6 g Phosphorpentachlorid versetzt. Man rührt die Mischung 2,5 Stunden lang bei —15°C und weitere 2,5 Stunden bei 0°C. Dann engt man die klare Lösung weitgehend im Vakuum ein, verrührt den öligen Rückstand mit Benzin (Siedebereich 40-60°C) und erhält 16 g 4-(4-Chlorphenyl)-1-(4-fluorphenyl)-3--pyrazolessigsäurechlorid vom Schmelzpunkt 93-95°C.

Eine Lösung von 17,5 g 4-(4-Chlorphenyl)-1-(4--fluorphenyl)-3-pyrazolessigsäurechlorid in 100 ml Tetrahydrofuran wird auf 10°C gekühlt und mit 9,8 ml Triethylphosphit versetzt. Man rührt noch 3 Stunden lang bei 10-15°C, engt die Lösung im Vakuum ein und kristallisiert den öligen Rückstand aus Diisopropylether. Man erhält 18,8 g (83,4%) 2-[4-(4--Chlorphenyl)-1-(4-fluorphenyl)-3-pyrazolyl]-1-hydroxy-ethenphosphonsäure-diethylester vom Schm. 96-98°C.

b) Zu einer Lösung von 5,7 d Diethylphosphit und 4,6 ml Diethylamin in 30 ml Tetrahydrofuran wird bei 0°C eine Lösung von 18 g 2-[4-(4-Chlorphenyl)-1-(4-fluorphenyl)-3-pyrazolyl]-1-hydroxy-ethen-phosphonsäure-diethylester in 40 ml Tetrahydrofuran eingetropft, und die Mischung 5 Stunden lang bei 0-5°C gerührt. Man engt das Gemisch im Vakuum ein, kristallisiert aus Diethylether und dann aus Tetrachlorkohlenstoff um und erhält 15,2 g (64,4%) 2-[4-(4-Chlorphenyl)-1-(4-fluorphenyl)-3-pyrazolyl]-1-hydroxyethan-1,1-bis(Phosphonsäurediethylester) vom Schmelzpunkt 141-142°C.

*Beispiel 14*

11,8 g 2-[4-(4-Chlorphenyl)-1-(4-fluorphenyl)-3--pyrazolyl]-1-hydroxyethan-1,1-bis(phosphonsäurediethylester) werden mit 5 Äquivalenten Jodtrimetilsilan in 50 ml Tetrachlorkohlenstoff unter Stickstoff 1 Stunde lang bei Raumtemperatur gerührt. Man engt die Mischung im Vakuum ein, versetzt den Rückstand mit Wasser und Aceton, rührt noch 30 Minuten lang und kristallisiert das ausgefallene Produkt aus Ethanol um. Nan erhält so 8,0 g (84%) 2-[4-(4-Chlorphenyl)-1-(4-fluorphenyl)-3-pyrazolyl]-1-hydroxyethan-1,1-diphosphonsäure vom Schmelzpunkt 202-204°C.

*Beispiel 15*

0,59 g 2-[4-(4-Chlorphenyl)1-(4-fluorphenyl)-3--pyrazolyl]-1-hydroxyethan-1,1-bis(phosphonsäurediethylester) werden mit 4 ml 63 prozentiger Bromwasserstoffsäure versetzt und zwei Stunden lang auf 100°C erhitzt. Dann verdünnt man das Gemisch mit Wasser und lässt es erkalten. Das erhaltene Rohprodukt wird zerkleinert, aus Ethanol umkristallisiert und man erhält 0,37 g (77%7 2-[4-(4-Chlorphenyl)--1-(4-fluorphenyl)-3-pyrazolyl]-1-hydroxyethan--1,1-diphosphonsäure vom Schmelzpunkt 201-203°C.

*Beispiel 16*

Eine Lösung von 1,9 g 2-[4-(4-Chlorphenyl)-1-(4--fluorphenyl)-3-pyrazolyl]-1-hydroxyethan-1,1-diphosphonsäure in 5 ml Dimethylformamid wird mit einer Lösung von 0,8 g Natriumhydrogencarbonat in 10 ml Wasser versetzt und zwei Stunden lang bei Raumtemperatur gerührt. Man saugt das abgeschiedene Produkt ab, wäscht es mit wenig Wasser, trocknet es bei 110°C und erhält 1,6 g (76%) 2-[4--(4-Chlorphenyl)-1-(4-fluorphenyl)-3-pyrazolyl]-1--hydroxyethan-diphosphonsäure-dinatriumsalz vom Schmelzpunkt oberhalb 300°C.

*Beispiel 17*

[3-(4-Chlorphenyl)-1-phenyl-4-pyrazolyl]-acetylchlorid wird wie in Beispiel 13 beschrieben mit Trimethylphosphit umgesetzt, aufbereitet und man erhält in 80%iger Ausbeute den 2-[3-(4-Chlorphenyl)-1--phenyl-4-pyrazolyl]-1-hydroxyethen-phosphonsäure-dimethylester vom Schmelzpunkt 174°C (Diethylether).

2-[3-(4-Chlorphenyl)-1-phenyl-4-pyrazolyl]-1-hydroxyethen-phosphonsäure-dimethylester wird wie in Beispiel 13 beschrieben mit Dimethylphosphit umgesetzt, aufbereitet und man erhält in 69%iger Ausbeute den 2-[3-(4-Chlorphenyl)-1-phenyl-4-pyrazolyl]-1-hydroxy-ethan-1,1-bis-(phosphonsäure--dimethylester) vom Schmelzpunkt 130°C.

*Beispiel 18*

2-[3-(4-Chlorphenyl)-1-phenyl-4-pyrazolyl]-1-hydroxyethan-1,1-bis(phosphonsäure-dimethylester) wird wie in Beispiel 14 beschrieben umgesetzt, aufbereitet und man erhält in 78%iger Ausbeute die 2-[3-(4-Chlorphenyl)-1-phenyl-3-pyrazolyl]-1-hydroxy-ethan-1,1-diphosphonsäure vom Schmelzpunkt 199°C.

*Beispiel 19*

a) Man gibt zu einer Suspension von 0,7 g 80%-igem Natriumhydrid in 40 ml 1,2-Dimethoxyethan bei 20°C 2,8 g Malonsäuredimethylester und rührt die Mischung 30 Minuten lang. Dann fügt man eine Lösung von 7,3 g 3-Brommethyl-4-(4-chlorphenyl)--1-(4-fluorphenyl)-pyrazol in 30 ml 1,2-Dimethoxyethan zu und rührt weitere 12 Stunden lang. Man arbeitet die Reaktionsmischung in üblicher Weise auf, kristallisiert den Rückstand aus Cyclohexan um und erhält 4,2 g [4-(4-Chlorphenyl)-1-(4-fluorphenyl)-3--pyrazolylmethyl]-malonsäuredimethylester vom Schmelzpunkt 123°C.

b) Eine Lösung von 0,9 g [4-(4-Chlorphenyl)-1-(4--fluorphenyl)-3-pyrazolylmethyl]-malonsäuredimethylester in 2,5 ml Ethanol wird mit 12 ml 2 n wässriger Natronlauge versetzt und 3 Stunden lang unter Rückfluss erhitzt. Man lässt die Mischung erkalten, säuert sie mit 2 n Salzsäure an, kristallisiert den Niederschlag aus Acetonitril um und erhält 0,8 g [4-(4--Chlorphenyl)-1-(4-fluorphenyl)-3-pyrazolylmethyl]--malonsäure vom Schmelzpunkt 188°C.

c) Eine Lösung von 3 g [4-(4-Chlorphenyl)-1-(4--fluorphenyl)-3-pyrazolylmethyl]-malonsäure in 50 ml Chlorbenzol wird bis zur Beendigung der Gasentwicklung unter Rückfluss erhitzt (ca. 2,5 Stunden). Man engt das Gemisch im Vakuum ein, kristallisiert

den Rückstand aus Tetrachlorkohlenstoff um und erhält 2,2 g 3-[4-(4-Chlorphenyl)-1-(4-fluorphenyl)--3-pyrazolyl]-propionsäure vom Schmelzpunkt 131 °C.

d) Zu einer Mischung aus 1,9 g 3-[4-(4-Chlorphenyl)-1-(4-fluorphenyl)-3-pyrazolyl]-propionsäure in 60 ml Diethylether gibt man bei 0 °C portionswesie 1,3 g Phosphorpentachlorid und rührt das Gemisch drei Stunden lang. Man engt dann ein, kristallisiert den Rückstand aus Benzin um und erhält 1,85 g 3--[4-(4-Chlorphenyl)-1-(4-fluorphenyl)-3-pyrazolyl]--propionsäurechlorid vom Schmelzpunkt 111 °C.

e) Zu einer Lösung von 1,85 g 3-[4-(4-Chlorphenyl)-1-(4-fluorphenyl)-3-pyrazolyl]-propionsäurechlorid in 10 ml Diethylether tropft man bei 0 °C eine Lösung von 0,7 g Trimethylphosphit in 2 ml Diethylether. Man lässt das Gemisch drei Tage lang stehen, engt im Vakuum ein und erhält 1,98 g 3-[4-(4-Chlorphenyl)-1-(4-fluorphenyl)-3-pyrazolyl]-1-oxopropan-1-phosphonsäure-dimethylester als Öl.

f) Zu einer Lösung von 0,55 g Dimethylphosphit und 50 mg Diethylamin in 10 ml Diethylether tropft man bei 0 °C eine Lösung von 1,98 g 3-[4-(4-Chlorphenyl)-1-(4-fluorphenyl)-3-pyrazolyl]-1-oxopropan-1-phosphonsäure-dimethylester in 15 ml Diethylether und 10 ml Dichlormethan. Man rührt dann drei Tage lang bei 0 °C, arbeitet die Reaktionsmischung in üblicher Weise auf, kristallisiert den Rückstand aus Ethanol um und erhält 1 g 3-[4-(4-Chlorphenyl)-1-(4-fluorphenyl)-3-pyrazolyl]-1-hydroxypropan-1,1-bis(phosphonsäure-dimethylester) vom Schmelzpunkt 131 °C.

*Beispiel 20*

Zu einer Suspension von 0,22 g 3-[4-(4-Chlorphenyl)-1-(4-fluorphenyl)-3-pyrazolyl]-1-hydroxypropan-1,1-bis(phosphonsäure-dimethylester) in 4 ml Tetrachlormethan gibt man bei 0° 0,34 g Jodtrimethylsilan und rührt das Gemisch eine Stunde lang bei 0 °C und weitere zwei Stunden bei Raumtemperatur. Dann engt man die Reaktionsmischung ein, kristallisiert den Rückstand aus Ethanol um und erhält 130 mg 3-[4-(4-Chlorphenyl)-1-(4-fluorphenyl)-3-pyrazolyl]-1-hydroxypropan-1,1-diphosphonsäure vom Schmelzpunkt 223 °C.

**Patentansprüche**

1. Diphosphonsäure-Derivate der allgemeinen Formel I

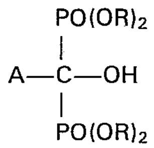

(I),

worin

R ein Wasserstoffatom, ein Alkalimetallatom, ein Erdalkalimetallatom oder eine 1 bis 4 Kohlenstoffatome enthaltende Alkylgruppe darstellt und

A der Rest

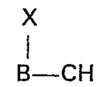

ist, worin

X ein Wasserstoffatom, eine Methylgruppe oder eine Ethylgruppe darstellt und

B einen in para-Stellung durch einen Isobutylrest, Cyclohexylrest oder 1-Pyrrolidinylrest und gegenenfalls zusätzlich in der meta-Stellung durch Fluor oder Chlor substituierten oder einen in meta-Stellung durch eine Benzoylgruppe oder Phenoxygruppe substituierten oder einen in ortho-Stellung durch eine 2,4-Dichlorphenoxygruppe oder eine 2,6-Dichlorphenylaminogruppe substituierten Phenylrest bedeutet, oder die Gruppe

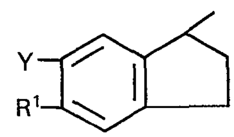

bedeutet, worin

$R^1$ einen Cyclohexylrest oder Cyclopentylmethylrest darstellt und

Y ein Wasserstoffatom oder ein Chloratom bedeutet, oder die Gruppe

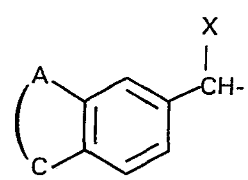

bedeutet, worin

X die obengenannte Bedeutung besitzt und

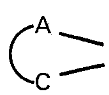 die Reste

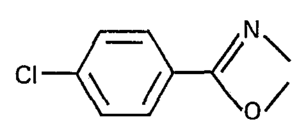 ;

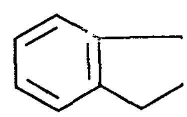 ;

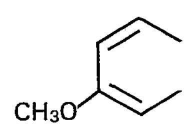 oder

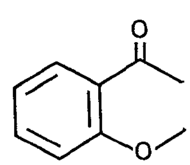

darstellen, oder die Gruppe

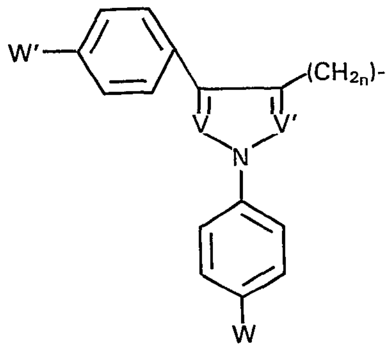

bedeutet, worin

n die Ziffern 1, 2 oder 3 darstellt, W und

W' gleich oder verschieden sind und ein Wasserstoffatom, ein Fluoratom oder ein Chloratom darstellen und einer der Reste V oder V' ein Stickstoffatom und der andere ein gegebenenfalls durch eine Phenylgruppe substituierter Methinrest bedeutet, oder die Gruppe

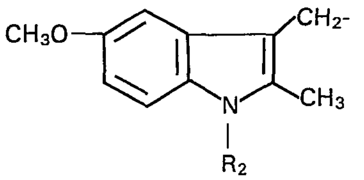

bedeutet, worin

$R_2$ einen p-Chlorbenzoylrest oder Cinnamoylrest darstellt.

2. Diphosphonsäure-Derivate der allgemeinen Formel Ia

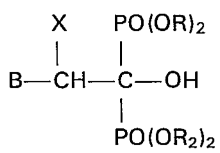

(Ia),

worin

R die im Anspruch 1 genannte Bedeutung besitzt,

X ein Wasserstoffatom, eine Methylgruppe oder eine Ethylgruppe darstellt und

B einen in para-Stellung durch einen Isobutylrest, Cyclohexylrest, Alkoxyrest oder 1-Pyrrolinylrest und gegebenenfalls zusätzlich in der meta-Stellung durch Fluor oder Chlor substituierten oder einen in meta-Stellung durch eine Benzoylgruppe oder Phenoxygruppe substituierten oder einen in ortho-Stellung durch eine 2,4-Dichlorphenoxygruppe oder eine 2,6-Dichlorphenylaminogruppe substituierten Phenylrest bedeutet.

3. Diphosphonsäure-Derivate der allgemeinen Formel Ib

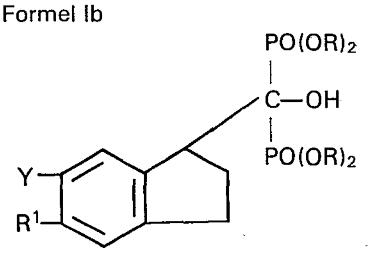

(Ib),

worin

R die im Anspruch 1 genannte Bedeutung besitzt

$R^1$ einen Cyclohexylrest oder Cyclopentylmethylrest darstellt und

Y ein Wassertstoffatom oder ein Chloratom bedeutet.

4. Diphosphonsäure-Derivate der allgemeinen Formel Ic

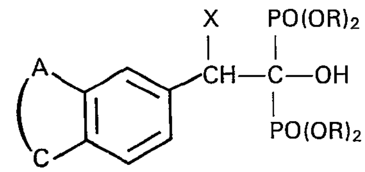

(Ic),

worin

R und X die im Anspruch 1 genannte Bedeutung besitzen und

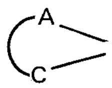

die Reste

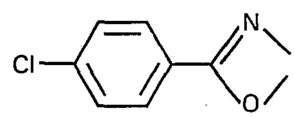

;

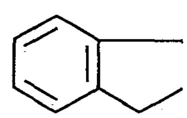

;

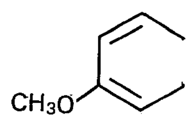

oder

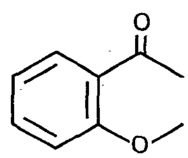

darstellen.

5. Diphosphonsäure-Derivate der allgemeinen Formel Id

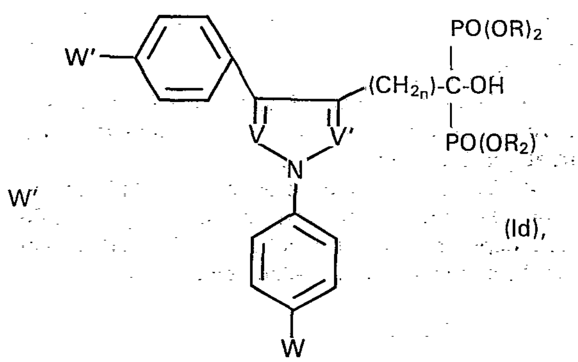

(Id),

worin

n die Ziffern 1, 2 oder 3 darstellt,

R die im Anspruch 1 genannte Bedeutung besitzt,

W und W' gleich oder verschieden sind und ein Wasserstoffatom, ein Fluoratom oder ein Chloratom darstellen und einer der Reste V oder V' ein Stickstoffatom und der andere ein gegebenenfalls durch eine Phenylgruppe substituierter Methinrest bedeutet.

6. Diphosphonsäure-Derivate der allgemeinen Formel Ie

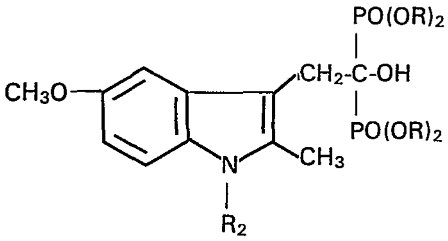

(Ie),

worin

R die im Anspruch 1 genannte Bedeutung besitzt und

$R_2$ einen p-Chlorbenzoylrest oder Cinnamoylrest darstellt.

7. 2-[1-(4-Chlorbenzoyl)-5-methoxy-2-methyl-3--indolyl]-1-hydroxy-ethan-1,1-bis(phosphonsäuredimethylester) und 2-[1-4-(Chlorbenzoyl)-5-methoxy-2-methyl-3-indolyl]-1-hydroxy-ethan-1,1-diphosphonsäure.

8. 2-(6-Methoxy-2-naphthyl)-1-hydroxy-propan--1,1-bis(phosphonsäuredimethylester) und 2-(6--Methoxy-2-naphthyl)-1-hydroxy-propan-1,1-diphosphonsäure.

9. (6-Chlor-5-cyclopentylmethyl-1-indanyl)-hydroxymethan-bis(phosphonsäurediethylester) und (6-Chlor-5-cyclopentylmethyl-1-indanyl)-hydroxymethan-diphosphonsäure.

10. 2-[4-(4-Chlorphenyl)-1-(4-fluorphenyl)-3--pyrazolyl]-1-hydroxyethan-1,1-bis(phosphonsäurediethylester), 2-[4-(4-Chlorphenyl-1-(4-fluorphenyl)-3-pyrazolyl]-1-hydroxy-ethan-1,1-diphosphonsäure und deren Natriumsalz.

11. 2-[3-(4-Chlorphenyl)-1-phenyl-4-pyrazolyl]--1-hydroxyethan-1,1-bis-(phosphonsäuredimethylester und 2-[3-(4-Chlorphenyl)-1-phenyl-4-pyrazolyl]-1-hydroxy-ethan-1,1-diphosphonsäure.

12. 3-[4-(4-Chlorphrnyl)-1-(4-fluorphenyl)-3--pyrazolyl]-1-hydroxy-propan-1,1-bis(phosphonsäuredimethylester) und 3-[4-(4-Chlorphenyl)-1-(4--fluorphenyl)-3-pyrazolyl]-1-hydroxy-propan-1,1-diphosphonsäure.

13. Pharmazeutische Präparate gekennzeichnet durch einen Gehalt an einem Diphosphonsäure-Derivat gemäss Anspruch 1 bis 12.

14. Verfahren zur Herstellung von Diphosphonsäure-Derivaten der allgemeinen Formel I gemäss Patentanspruch 1, dadurch gekennzeichnet, dass man ein Acylphosphonat der allgemeinen Formel III

$$A\text{-}COPO(OR)_2 \quad \text{(III)},$$

worin

A' und R die im Anspruch 1 genannte Bedeutung besitzen in Gegenwart von Basen mit einem Dialkylphosphit der allgemeinen Formel IV

$$HPO(OR)_2 \quad \text{(IV)},$$

worin

R die im Anspruch 1 genannte Bedeutung besitzt, umsetzt, die gebildeten Ester gewünschtenfalls verseift und gewünschtenfalls die Säuren in ihre Salze überführt.

## Claims

1. Diphosphonic acid derivatives of general formula 1

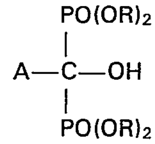

(I),

wherein

R is hydrogen, an alkali metal, an alkaline earth metal or an alkyl group of 1 to 4 carbon atoms, and

A is the group

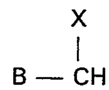

wherein

X is hydrogen, methyl or ethyl, and

B is phenyl substituted in the para position by an isobutyl, cyclohexyl, alkoxy or 1-pyrrolinyl group, and optionally, additionally substituted in the meta position by fluorine or chlorine, or is phenyl substituted in the meta position by a benzoyl or a phenoxy group or is phenyl substituted in the ortho position by a 2,4-dichlorphenoxy or a 2,6-dichlorphenylamino group, or

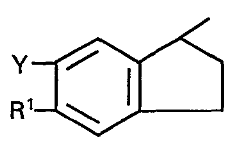

wherein

$R_1$ is a cyclohexyl or cyclopentylmethyl group and

Y is hydrogen or chlorine, or

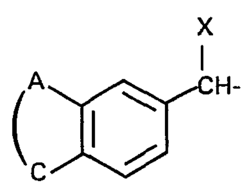

wherein

X has the meaning given above, and

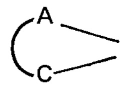

is the group

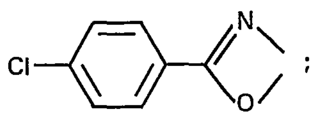

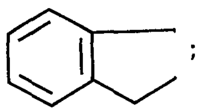

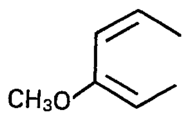

or

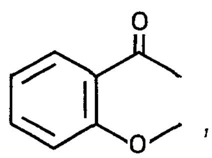

or

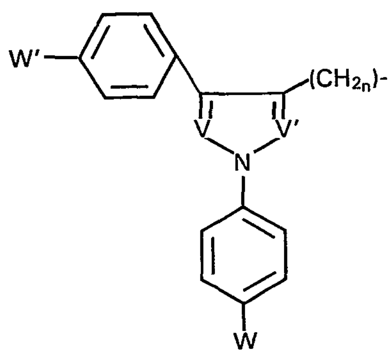

wherein
n is the integer 1, 2 or 3,
W and W' are the same or different and are hydrogen, chlorine or fluorine, and one of the groups V or V' is nitrogen and the other is a methyne group, optionally substituted by phenyl, or

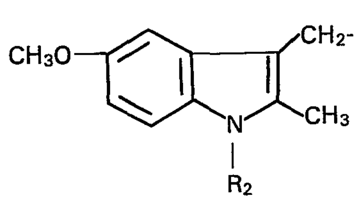

wherein
$R_2$ is a p-chlorobenzoyl or a cinnamoyl group.

2. Diphosphonic acid derivatives of general formula Ia

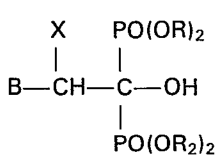

(Ia),

wherein
R has the meaning given in claim 1,
X is hydrogen, methyl or ethyl and
B is phenyl substituted in the para position by an isobutyl, cyclohexyl, alkoxy or 1-pyrrolinyl group, and optionally, additionally substituted in the meta position by fluorine or chlorine, or is phenyl substituted in the meta position by a benzoyl or a phenoxy group or is phenyl substituted in the ortho position by a 2,4-dichlorophenoxy or a 2,6-dichlorophenylamino group.

3. Diphosphonic acid derivatives of general formula Ib

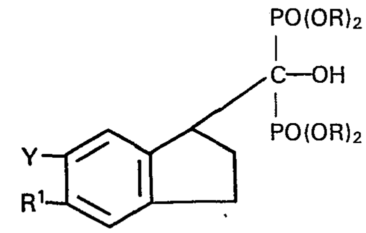

(Ib),

wherein
R has the same meaning given in claim 1,
$R^1$ is a cyclohexyl or cyclopentylmethyl group and
Y is hydrogen or chlorine.

4. Diphosphonic acid derivatives of general formula Ic

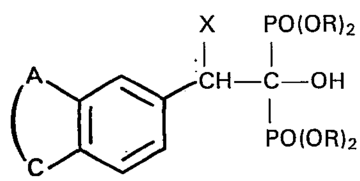

(Ic),

wherein
R and X have the meanings given in claim 1 or 2 and

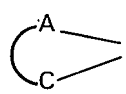

is the group

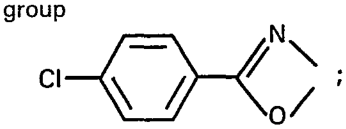

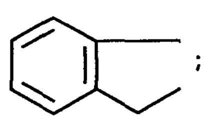

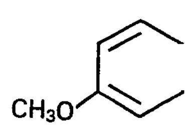

or

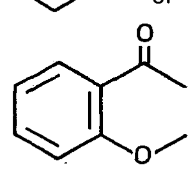

5. Diphosponic acid derivatives of general formula Id

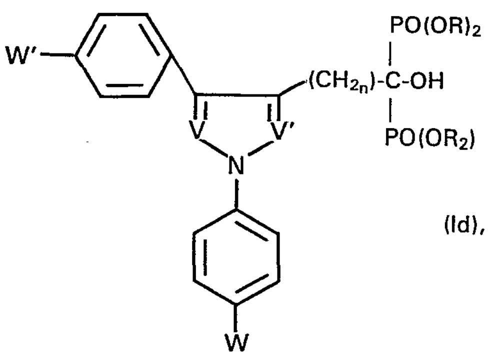

(Id),

wherein
n is the integrer 1, 2 or 3,
R has the meaning given in claim 1,
W and W' are the same or different and are hydrogen, chlorine or fluorine, and one of the groups V or V' is nitrogen and the other is a methyne group, optionally substituted by phenyl.

6. Diphosphonic acid derivatives of general formula Ie

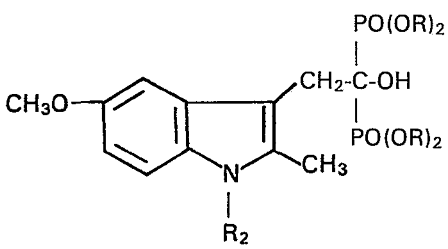

(Ie),

wherein
R has the meaning given in claim 1 and
$R_2$ is p-chlorobenzoyl or a cinnamoyl group.

7. 2-[1-(4-Chlorobenzoyl)-5-methoxy-2-methyl-3-indolyl]-1-hydroxyethane-1,1-bis(phosphonic acid dimethyl ester) and 2-[1-(4-chlorbenzoyl)-5-methoxy-2-methyl-3-indolyl]-1-hydroxyethane-1,1-diphosphonic acid.

8. 2-(6-Methoxy-2-naphthyl)-1-hydroxypropane-1,1-bis-(phosphonic acid dimethyl ester) and 2-(6-methoxy-2-naphthyl)-1-hydroxypropane-1,1-diphosphonic acid.

9. (6-Chloro-5-cyclopentylmethyl-1-indanyl)-hydroxymethane-bis(phosphonic acid diethyl ester) and (6-chloro-5-cyclopentylmethyl-1-indanyl)-hydroxymethane-diphosphonic acid.

10. 2-[4-(4-Chlorophenyl)-1-(4-fluorophenyl)-3-pyrazolyl]-1-hydroxymethane-1,1-bis(phosphonic acid diethyl ester), 2-[4-(4-chlorophenyl-1-(4-fluorophenyl)-3-pyrazolyl]-1-hydroxyethane-1,1-diphosphonic acid and its sodium salt.

11. 2-[3-(4-Chlorophenyl)-1-phenyl-4-pyrazolyl]-1-hydroxy-ethane-1,1-bis-(phosphonic acid dimethyl ester and 2-[3-(4-chlorophenyl)-1-phenyl-4-pyrazolyl]-1-hxdroxy-ethane-1,1-diphosponic acid.

12. 3-[4-(4-Chlorophenyl)-1-(4-fluorophenyl)-3-pyrazolyl]-1-hydrxypropane-1,1-bis(phosphonic acid dimethyl ester) and 3-[4-(4-chlorophenyl)-1-(4-fluorophenyl)-3-pyrazolyl]-1-hydroxypropane-1,1-diphosphonic acid.

13. Pharmaceutical compositions characterised in that they contain a phosphonic acid derivative according to claims 1 to 12.

14. Process for the preparation of diphosphonic acid derivatives of general formula I according to claim 1 characterised in that an acylphosphonate of general formula III

$$A\text{-}COPO(OR)_2 \qquad (III)$$

wherein
A and R have the meaning given in claim 1, is treated, in the presence of a base, with a dialkyl phosphite of general formula IV

$$HPO(OR)_2 \qquad (IV)$$

wherein
R has the meaning given in claim 1, the ester formed is optionally saponified and acids are optionally converted to their salts.

**Revendications**

1. Dérivés d'acides diphosphoniques répondant à la formule générale I:

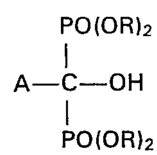

(I),

dans laquelle:
R représente un atome d'hydrogène, un atome de métal alcalin, un atome de métal alcalino-terreux ou un radical alkyle contenant de 1 à 4 atomes de carbone, et
A représente un radical:

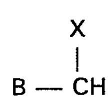

dans lequel:
X représente un atome d'hydrogène, un radical méthyle ou un radical alkyle, et
B représente un radical phényle portant, en position para, un radical isobutyle, un radical cyclohexyle, un radical alkyloxy ou un radical pyrrolinyle-1 avec en plus, éventuellement, en position méta, un atome de fluor ou de chlore, ou représente un radical phényle portant, en position méta, un radical benzoyle ou un radical phénoxy, ou représente un radical phényle portant, en position ortho, un radical dichloro-2,4 phénoxy ou un radical dichloro-2,6 phénylamino, ou représente un radical:

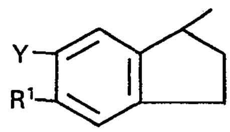

dans lequel:
$R^1$ représente un radical cyclohexyle ou un radical cyclopentylméthyle et
Y représente un atome d'hydrogène ou un atome de chlore,
ou représente un radical:

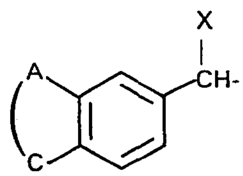

dans lequel:
X a la signification précédemment donnée, et

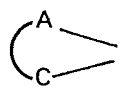

représente l'un des radicaux suivants:

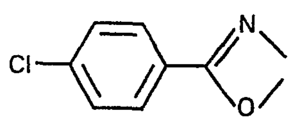
,

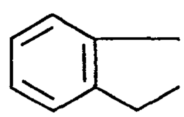
,

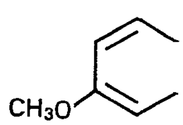
et

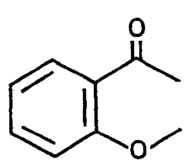

ou représente un radical:

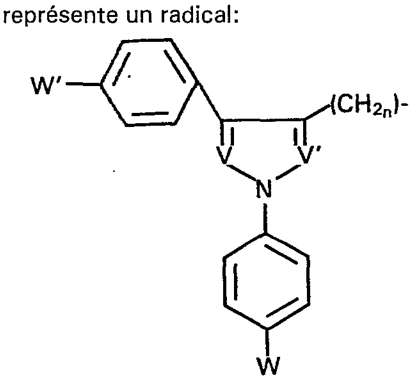

dans lequel:
n désigne un nombre égal à 1, à 2 ou à 3,
W et W' représentent chacun, indépendamment l'un l'autre, un atome d'hydrogène, de fluor ou de chlore, et
l'un des symboles V et V' représente un atome d'azote et l'autre un radical méthine éventuellement porteur d'un radical phényle,
ou représente un radical :

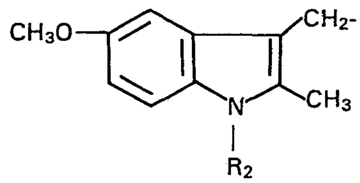

dans lequel:
$R^2$ représente un radical chloro-4 benzoyle ou cinnamoyle.

2. Dérivés d'acides diphosphoniques répondant à la formule générale Ia:

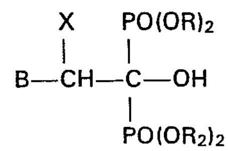
(Ia),

dans laquelle:
R a la signification donnée à la revendication 1,
X représente un atome d'hydrogène, un radicale méthyle ou un radical éthyle, et
B représente un radical phényle qui porte, en position para, un radical isobutyle, un radical cyclohexyle, un radical alcoxy ou un radical pyrrolinyle-1 et éventuellement, en plus, en position méta, un atome de fluor ou de chlore, ou représente un radical phényle portant, en position méta, un radical benzoyle ou un radical phénoxy, ou représente un radical phényle portant, en position ortho, un radical dichloro-2,4 phénoxy ou un radical dichloro-2,6 phénylamino.

3. Dérivés d'acides diphosphoniques répondant à la formule générale Ib:

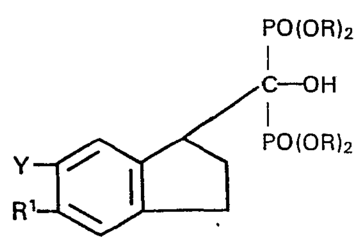
(Ib),

dans laquelle:
R a la signification donnée à la revendication 1,
$R^1$ représente un radical cyclohexyle ou un radical cyclopentylméthyle et
Y représente un atome d'hydrogène ou de chlore.

4. Dérivés d'acides diphosphoniques répondant à la formule générale Ic:

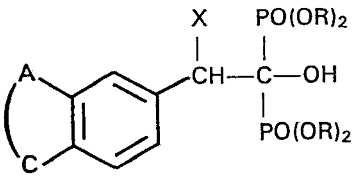

(Ic),

dans laquelle:

R et X ont les significations données dans l'une des revendicatione 1 et 2 et

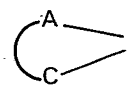

représente l'un des radicaux suivants:

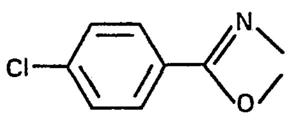

,

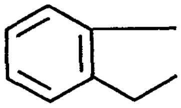

,

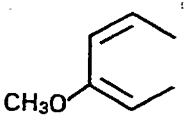

et

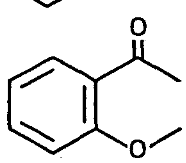

5. Dérivés d'acides diphosphoniques répondant à la formule générale Id:

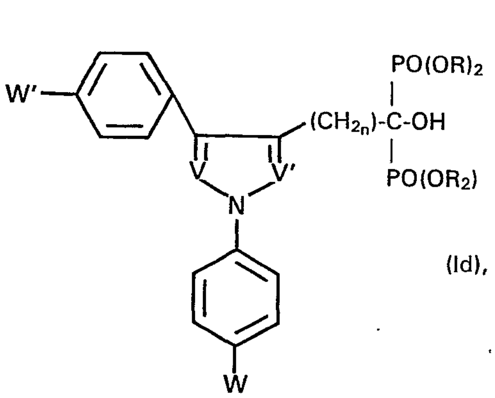

(Id),

dans laquelle:

n représente un nombre égal à 1, à 2 ou 3,

R a la signification donnée à la revendication 1,

W et W' représente chacun, indépendamment l'un de l'autre, un atome d'hydrogène, un atome de fluor ou un atome de chlore et

l'un des symboles V et V' représente un atome d'azote et l'autre un radical méthine éventuellement porteur d'un radical phényle.

6. Dérivés d'acides diphosphoniques répondant à la formule générale Ie:

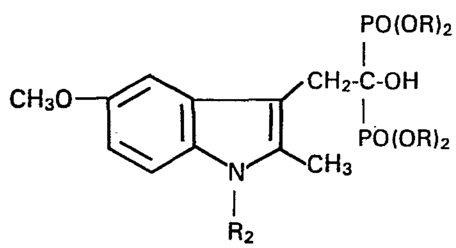

(Ie),

dans laquelle:

R a la signification donnée à la revendication 1 et

$R_2$ représente un radical chloro-4 benzoyle ou un radical cinnamoyle.

7. [(Chloro-4 benzoyl)-1 méthoxy-5 méthyl-2 indolyl-3]-2 hydroxy-1 éthane-bis-(phosphonate de diméthyle)-1,1 et acide [(chloro-4 benzoyl)-1 méthoxy-5 méthyl-2 indolyl-3]-2 hydroxy-1 éthane-diphosphonique-1,1.

8. (Méthoxy-6 naphthyl-2)-2 hydroxy-1 propane--bis-(phosphonate de diméthyle)-1,1 et acide (méthoxy-6 naphthyl-2)-2 hydroxy-1 propane-diphosphonique-1,1.

9. (Chloro-6 cyclopentylméthyl-5 indanyl-1)-hydroxy-méthane-bis-(phosphonate de diéthyle) et acide (chloro-6 cyclopentylméthyl-5 indanyl-1)-hydroxy-méthane-diphosphonique.

10. [(Chloro-4 phényl)-4 (fluoro-4 phényl)-1 pyrazolyl-3]-2 hydroxy-1 éthane-bis-(phosphonate de diéthyle)-1,1, acide [(chloro-4 phényl)-4 (fluoro-4 phényl)-1 pyrazolyl-3]-2 hydroxy-1 éthane-diphosphonique-1,1 et son sel de sodium.

11. [(Chloro-4 phényl)-3 phényl-1 pyrazolyl-4]-2 hydroxy-1 éthane-bis-(phosphonate de diméthyle)--1,1 et acide [(chloro-4 phényl)-3 phenyl-1 pyrazolyl-4]-2 hydroxy-1 éthane-diphosphonique-1,1.

12. [(Chloro-4 phényl)-4 (fluoro-4 phényl)-1 pyrazolyl-3]-3 hydroxy-1 propane-bis-(phosphonate de diméthyle)-1,1 et acide [(chloro-4 phényl)-4 (fluoro--4 phényl)-1 pyrazolyl-3]-3 hydroxy-1 propane-diphosphonique-1,1.

13. Médicaments caractérisés en ce qu'ils contiennent un dérivé d'acide diphosphonique selon l'une quelconque des revendications 1 à 12.

14. Procédé de préparation de dérives d'acides diphosphoniques de formule générale I selon la revendication 1, procédé caractérisé en ce qu'on fait réagir un acyl-phosphonate répondant à la formule générale III:

$$A\text{-}COPO(OR)_2 \qquad (III)$$

dans laquelle A et R ont les significations données à la revendication 1, en présence de bases, avec un phosphite de dialkyle répondant à la formule générale IV:

$$HPO(OR)_2 \qquad (IV)$$

dans laquelle R a la signification donnée à la revendication 1, si on le désire on saponifie les esters formée et, si on le désire, on transforme les acides en leurs sels.